# EUROPEAN PATENT APPLICATION

(11) **EP 4 644 327 A1**
(43) Date of publication of application: **05.11.2025**
(21) Application number: 23773158.3
(22) Date of filing: 17.08.2023
(51) Int. Cl.: C01F 17/235, H01M 8/1051

(54) **HIGHLY DISPERSIBLE ORGANIC-INORGANIC HYBRID CERIA NANOPARTICLES AND PREPARATION METHOD THEREOF**

(30) Priority: 27.12.2022 KR 20220186207; 27.12.2022 KR 20220186208
(71) Applicant: Aestech Co., Ltd, Daejeon 34052 (KR)
(72) Inventor: KIM, Ju Young, Seoul 06219 (KR)
(74) Representative: Vossius & Partner Patentanwälte Rechtsanwälte mbB
(86) International application number: PCT/KR2023/012146
(87) International publication number: WO 2024/143751

(57) **Abstract**

The present invention relates to highly dispersible organic-inorganic hybrid ceria nanoparticles, a method for preparing the same, and an ionomer and ion exchange membrane having improved oxidation stability, including the organic-inorganic hybrid ceria nanoparticles.

## Description

### [Technical Field]

The present invention relates to highly dispersible organic-inorganic hybrid ceria nanoparticles, a method for preparing the same, and an ionomer and ion exchange membrane having improved oxidation stability, including the organic-inorganic hybrid ceria nanoparticles.

### [Background Art]

Ceria nanoparticles are known to be very good antioxidants and have very good ability to remove active radicals. Cerium is one of rare metals, and ceria is an oxide form of cerium.

These ceria nanoparticles are generally prepared by a precipitation method, a reverse micellar method, a hydrothermal method, or the like using various cerium precursors. Ceria nanoparticles prepared in most processes are obtained in the form of aggregated micron-sized powders because they are heat treated to increase crystallinity, so ceria nanoparticles cannot be redispersed in organic solvents and are very easily aggregated even after forced dispersion.

In order to disperse the ceria nanoparticles in an organic solvent and water in a nano size, an organic substance such as a polymer or a surfactant must be present on the surface of the ceria nanoparticles, which are metal oxide. Therefore, materials such as polyacrylic acid, citric acid, and oleic acid are mainly used as dispersants in order to prepare ceria nanoparticles having water dispersibility or organic solvent dispersibility.

However, until now, there has been no report on cases in which an ionomer is applied to a manufacturing process of an ion exchange membrane by improving the nano-dispersion characteristics of ceria in the ionomer without separately using additives such as surfactants or dispersants.

In addition, when an existing oxidation stabilizer is introduced into an ionomer or an ion exchange membrane, there are problems in that dispersibility is lost during the dilution process, and the physical properties of a separator are deteriorated because the dispersion stability and oxidation stabilization effect do not last for a long time. Accordingly, the development of an oxidation stabilizer capable of solving these problems is required.

### [Disclosure]

### [Technical Problem]

An object of the present invention is to provide highly dispersible nanoparticles in which an organic-inorganic hybrid compound and ceria are chemically bonded.

Another object of the present invention is to provide nanoparticles in which an organic-inorganic hybrid compound and ceria are chemically bonded, which can be redispersed in an organic solvent or ionomer solution in a nanoparticle size and have excellent dispersion stability..

Still another object of the present invention is to provide an ionomer and ion exchange membrane having excellent oxidation stability, including highly dispersed nanoparticles in which an organic-inorganic hybrid compound and ceria are chemically bonded.

### [Technical Solution]

One aspect of the present invention provides a method for manufacturing a highly dispersible organic-inorganic hybrid ceria nanoparticle comprising the steps of: i) preparing a fluorine-containing organic-inorganic hybrid compound through a hydrolysis-condensation reaction between a fluorine-containing silane compound and a multifunctional silane compound: ii) preparing a nanoparticle in which the fluorine-containing organic-inorganic hybrid compound and ceria are chemically bonded through the hydrolysis-condensation reaction by adding a cerium precursor to a solution containing the fluorine-containing organic-inorganic hybrid compound; and iii) precipitating and separating the nanoparticle by adding a basic aqueous solution to the solution.

The method for preparing a highly dispersible organic-inorganic hybrid ceria nanoparticle may further comprise the step vi) of preparing the nanoparticle in a fine powder state by drying the nanoparticle separated in the step of iii).

The fluorine-containing silane compound may include a fluoroalkoxysilane compound, a fluoroalkylsilane compound, or a mixture thereof, but is not limited thereto.

The multifunctional silane compound may be one selected from a trifunctional silane compound, a tetrafunctional silane compound, and a mixture thereof, but is not limited thereto.

The trifunctional silane compound may be a trialkoxysilane compound, and the tetrafunctional silane compound may be a tetraalkyl orthosilicate compound.

The cerium precursor may be one or more selected from the group consisting of cerium nitrate, cerium chloride, cerium ammonium nitrate, cerium sulfate, cerium acetate hydrate, cerium acetylacetonate hydrate, cerium bromide, cerium carbonate hydrate, cerium chloride heptahydrate, cerium 2-ethylhexanoate, cerium fluoride, cerium hydroxide, cerium iodide, cerium nitrate hexahydrate, cerium oxalate hydrate, and cerium sulfate hydrate, but is not limited thereto.

In the step of iii) of the method for manufacturing a highly dispersible organic-inorganic hybrid ceria nanoparticle, the added basic aqueous solution may be selected from sodium hydroxide, ammonia aqueous solution, and a mixture thereof, but is not limited thereto.

In the step of i) of the method for manufacturing a highly dispersible organic-inorganic hybrid ceria nanoparticle, a weight ratio of the fluorine-containing silane compound and the multifunctional silane compound may be in a range of 0.1:99 to 99:0.1.

In addition, in the step of ii) of the method for manufacturing a highly dispersible organic-inorganic hybrid ceria nanoparticle, the cerium precursor may be added in an amount of 0.1 to 80% by weight in the solution containing the fluorine-containing organic-inorganic hybrid compound.

According to another aspect of the present invention provides a highly dispersible organic-inorganic hybrid ceria nanoparticle in which a fluorine-containing organic-inorganic hybrid compound and ceria are chemically bonded, wherein the fluorine-containing organic-inorganic hybrid compound is produced by a hydrolysis-condensation reaction between a fluorine-containing silane compound and a multifunctional silane compound. In this case, the fluorine-containing silane compound may include a fluoroalkoxysilane or fluoroalkylsilane compound, and the multifunctional silane compound may include a trialkoxysilane compound, which is a trifunctional silane compound, a tetraalkyl orthosilicate compound, which is a tetrafunctional silane, or a mixture thereof.

The highly dispersible organic-inorganic hybrid ceria nanoparticle is characterized in that it can be redispersed in an organic solvent or ionomer solution in a nano size, and the size of the redispersed nanoparticle may be in a range of 1.2 to 40 nm.

Another aspect of the present invention provides an ionomer with excellent oxidation stability, comprising the highly dispersible organic-inorganic hybrid ceria nanoparticle. The content of the highly dispersible organic-inorganic hybrid ceria nanoparticle may be included in the range of 0.001 to 20% by weight based on the solid content of the ionomer.

Another aspect of the present invention provides a highly durable ion exchange membrane comprising the highly dispersible organic-inorganic hybrid ceria nanoparticle. The ion exchange membrane may be either an anion exchange membrane (AEM) or a cation exchange membrane (CEM).

The highly dispersible organic-inorganic hybrid ceria nanoparticle according to the present invention can be dispersed in any kind of ionomer or ion exchange membrane, and can be applied to a synthesized or commercial ionomer, a single polymer electrolyte membrane, or a reinforced composite membrane.

### [Advantageous Effects]

The highly dispersible nanoparticles in which an organic-inorganic hybrid compound and ceria are chemically bonded according to the present invention can be redispersed in an organic solvent or ionomer solution in the size of nanoparticles. The dispersibility and particle size of the highly dispersible ceria nanoparticles according to the present invention can be identified by the results of DSL, SEM, and EDS measurements in Examples.

In addition, as a result of the Fenton test of the ion exchange membrane in which highly dispersible nanoparticles in which an organic-inorganic hybrid compound and ceria were chemically bonded were dispersed, it was confirmed that the oxidation stability was greatly improved.

As described above, when the ionomer and the ion exchange membrane are manufactured using the fluorine-containing organic-inorganic hybrid ceria nanoparticles according to the present invention, there is an advantage in that the ceria nanoparticles can be evenly dispersed in the ionomer without aggregation and can be maintained in a dispersed state for a long time without a separate surfactant or dispersant.

Accordingly, the ionomer and the ion exchange membrane including the organic-inorganic hybrid ceria nanoparticles according to the present invention have remarkably improved oxidation stability, so that durability required for a separator can be secured.

### [Description of Drawings]

FIG. 1 is a SEM photograph showing the microstructure of highly dispersible organic-inorganic hybrid ceria nanoparticles manufactured according to Example 1-1.
FIG. 2 is a SEM photograph showing the microstructure of highly dispersible organic-inorganic hybrid ceria nanoparticles manufactured according to Example 2-1.
FIG. 3 is a graph showing a Fenton test result of an ion exchange membrane in which organic-inorganic hybrid ceria nanoparticles are redispersed according to Example 3.
FIG. 4 is a graph showing a Fenton test result of an ion exchange membrane in which organic-inorganic hybrid ceria nanoparticles are redispersed according to Example 3.
FIG. 5 is a graph showing a Fenton test result of an ion exchange membrane in which organic-inorganic hybrid ceria nanoparticles are redispersed according to Example 3.
FIG. 6 is a graph showing a Fenton test result of an ion exchange membrane in which organic-inorganic hybrid ceria nanoparticles are redispersed according to Example 4.
FIG. 7 is a graph showing a Fenton test result of an ion exchange membrane in which organic-inorganic hybrid ceria nanoparticles are redispersed according to Example 4.
FIG. 8 is a graph showing a Fenton test result of an ion exchange membrane in which organic-inorganic hybrid ceria nanoparticles are redispersed according to Example 4.

### [Mode for Invention]

Hereinafter, the present invention will be described in more detail with reference to Examples. However, the following Examples are provided by way of example to aid understanding of the present invention, and the scope of the present invention is not limited thereto. It should be understood that the present invention can be modified and implemented in many different forms, and includes all modifications, equivalents, and substitutes included in the spirit and scope of the present invention.

Further, if it is not contrarily defined, all terms used herein including technological or scientific terms have the same meanings as those generally understood by a person with ordinary skill in the art. Terms which are defined in a generally used dictionary should be interpreted to have the same meaning as the meaning in the context of the related art, and are not interpreted as ideal or excessively formal meanings unless clearly defined in the present application.

A method for manufacturing a highly dispersible organic-inorganic hybrid ceria nanoparticle according to an embodiment comprises the steps of preparing a fluorine-containing organic-inorganic hybrid compound through a hydrolysis-condensation reaction between a fluorine-containing silane compound and a multifunctional silane compound: preparing a nanoparticle in which the fluorine-containing organic-inorganic hybrid compound and ceria are chemically bonded through the hydrolysis-condensation reaction by adding a cerium precursor to a solution containing the fluorine-containing organic-inorganic hybrid compound; and precipitating and separating the nanoparticle by adding a basic aqueous solution to the solution.

In addition, an embodiment provides a highly dispersible nanoparticle in which a fluorine-containing organic-inorganic hybrid compound and ceria are chemically bonded. The highly dispersible nanoparticle is a nanoparticle in which a fluorine-containing organic-inorganic hybrid compound and ceria are chemically bonded. The fluorine-containing organic-inorganic hybrid compound is produced by a hydrolysis-condensation reaction between a fluorine-containing silane compound and a multifunctional silane compound.

The highly dispersible nanoparticle in which a fluorine-containing organic-inorganic hybrid compound and ceria are chemically bonded are characterized in that the nanoparticle can be redispersed in an organic solvent or ionomer solution in a nanoscale size.

The fluorine-containing silane compound used in manufacturing the organic-inorganic hybrid compound may be selected from a fluoroalkoxysilane compound, a fluoroalkylsilane compound, or a mixture thereof.

For example, the fluoroalkoxysilane or fluoroalkylsilane compound may be one or more selected from the group consisting of 1H,1H,2H,2H-perfluorooctyltriethoxysilane, 1H,1H,2H,2H-perfluorodecyltrimethoxysilane, 1H,1H,2H,2H-perfluorodecyltriethoxysilane, trichloro(1H,1H,2H,2H-perfluorooctyl)silane, trimethoxy(1H,1H,2H,2H-heptadecafluoro decyl)silane, triethoxy-1H,1H,2H,2H-tridecafluoro-n-octylsilane, trimethoxy(3,3,3-trifluoropropyl)silane, dimethoxy-methyl(3,3,3-trifluoropropyl)silane, trimethylpentafluoroethylsilane, (heptafluoropropyl)trimethylsilane, trimethyl(trifluoromethyl)silane, 1H,1H,2H,2H-perfluorododecyltrichlorosilane, but is not limited thereto, and may include any fluorine-containing silane compounds capable of reacting with a silicate compound.

The multifunctional silane compound may be one selected from a trifunctional silane compound, a tetrafunctional silane compound, and a mixture thereof, but is not limited thereto.

The trifunctional silane compound used for manufacturing the organic-inorganic hybrid compound may include a trialkoxysilane compound. A specific example may include one or more selected from the group consisting of methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, butyltrimethoxysilane, butyltriethoxysilane, butyltriisophoropoxysilane, hexyltrimethoxysilane, hexyltriethoxysilane, hexyltriisopropoxysilane, octyltrimethoxysilane octyltriethoxysilane, octyltriisopropoxysilane, decyl trimethoxysilane, decyltriethoxysilane, decyltriisopropoxysilane, octadecyltrimethoxysilane, octadecyltriethoxysilane, octadecyltriisopropoxysilane, vinyl trimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyldiethoxysilane, 3-glycidoxypropyltriethoxysilane, phenyltrimethoxysilane, phenyltriethoxysilane, p-aminophenyltrimethoxysilane, p-styryltrimethoxysilane, 3-(meth)acryloxypropyltriethoxysilane, 3-(meth)acryloxypropyltrimethoxysilane, 3-(meth)acryloxypropylmethyldimethoxysilane, 3-(meth)acryloxypropylmethyldiethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropylmethyldiethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxy silane, 3-chloropropyltrimethoxysilane, 3-mercaptopropylmethyldimethoxysilane, 3-mercaptopropyltrimethoxysilane, and 3-isocyanatepropyltriethoxysilane, but is not limited thereto.

The tetrafunctional silane compound used for manufacturing the organic-inorganic hybrid compound may include a tetraalkyl orthosilicate compound. A specific example may include one or more selected from the group consisting of tetramethyl orthosilicate, tetraethyl orthosilicate, methyltriethyl orthosilicate, dimethyldiethyl orthosilicate, tetrapropyl orthosilicate, tetraisopropyl orthosilicate, tetrabutyl orthosilicate, tetrasecondary butyl orthosilicate, tetratertiary butyl orthosilicate, tetrahexyl orthosilicate, tetracyclohexyl orthosilicate, and tetradodecyl orthosilicate, but is not limited thereto.

The fluorine-containing silane compound and the multifunctional silane compound may be reacted in a weight ratio ranging from 0.1:99 to 99:0.1, but is not particularly limited thereto.

After preparing the fluorine-containing organic-inorganic hybrid compound through the hydrolysis-condensation reaction between the fluorine-containing silane compound and the multifunctional silane compound, a cerium precursor is added to the solution containing the fluorine-containing organic-inorganic hybrid compound to prepare the nanoparticle. In other words, by adding the cerium precursor to the solution containing the fluorine-containing organic-inorganic hybrid compound, the nanoparticle in which the fluorine-containing organic-inorganic hybrid compound and ceria are chemically bonded can be prepared through the hydrolysis-condensation reaction.

The cerium precursor may be one or more selected from the group consisting of cerium nitrate, cerium chloride, cerium ammonium nitrate, cerium sulfate, cerium acetate hydrate, cerium acetylacetonate hydrate, cerium bromide, cerium carbonate hydrate, cerium chloride heptahydrate, cerium 2-ethylhexanoate, cerium fluoride, cerium hydroxide, cerium iodide, cerium nitrate hexahydrate, cerium oxalate hydrate, and cerium sulfate hydrate, but is not limited thereto, and may include any cerium ion-bound compound.

The cerium precursor may be added in an amount of 0.1 to 80% by weight in the solution containing the fluorine-containing organic-inorganic hybrid compound, but is not limited thereto.

After preparing the nanoparticle in which the fluorine-containing organic-inorganic hybrid compound and the ceria are chemically bonded by adding the cerium precursor through the hydrolysis-condensation reaction, the basic aqueous solution may be added to separate the nanoparticle. The basic aqueous solution may be selected from sodium hydroxide, ammonia aqueous solution, and a mixture thereof, but any basic aqueous solution capable of adjusting the pH may be used, and is not particularly limited thereto.

When an excessive amount of sodium hydroxide or ammonia solution is added to the solution in which the nanoparticle is dispersed, the dispersion stability of the nanoparticle in which the organic-inorganic hybrid compound and the ceria are chemically bound is rapidly reduced due to the rapid change in pH of the solution, resulting in precipitates.

The method for preparing a highly dispersible organic-inorganic hybrid ceria nanoparticle may further comprise the step vi) of preparing the nanoparticle in a fine powder state by drying the precipitated and separated nanoparticle, and, if necessary, a purification process prior to the drying may be performed.

A purification process in which the nanoparticle precipitate is centrifuged, separated by filtration, added with distilled water and dispersed in water, centrifuged again, separated by filtration, and dispersed in distilled water is repeated until the aqueous solution becomes neutral.

When the neutralized precipitate is dried at room temperature, the nanoparticle in which the fluorine-containing organic-inorganic hybrid compound and the ceria are chemically bonded can be obtained in a fine powder state.

The size of fine powder particles composed of the organic-inorganic hybrid ceria nanoparticles may range from 1.0 to 20 µm, and the ceria nanoparticles in a powder state are highly usable because they can be easily redispersed in organic solvents or ionomers in the size of nanoparticles. Organic solvents in which the highly dispersible ceria nanoparticles can be dispersed include alcohol, dimethyl sulfoxide, methylpyrrolidone, and dimethyl acetamide, but are not particularly limited.

It is a characteristic of the present invention that when a fine powder composed of the organic-inorganic hybrid ceria nanoparticle in the range of 1.0 to 20 µm obtained after separation and drying is mixed with an organic solvent or an ionomer dispersion solution, the fine powder can be redispersed as the organic-inorganic hybrid ceria nanoparticle with a size of 1.2 to 40 nm.

In this case, the ionomer in which the nanoparticles can be redispersed may be either an anionic conductive ionomer or a cation conductive ionomer. A perfluorine-based ionomer, a partial fluorine-based ionomer, a hydrocarbon-based ionomer, and the like may be used without particular limitation.

Specifically, types of perfluorine-based ionomers include poly(perfluorosulfonic acid), poly(perfluorocarboxylic acid), a copolymer of tetrafluoroethylene and fluorovinyl ether containing a sulfonic acid group, and a mixture thereof, and commercially available products include commercially available Nafion, Flemion, Aciplex, 3M ionomer, Dow ionomer, Solvay ionomer, Sumitomo ionomer, and a mixture thereof, but are not particularly limited thereto.

In addition, examples of partial fluorine-based ionomer include sulfonated poly(arylene ethersulfone-co-vinylidene fluoride), sulfonated trifluorostyrene-grafted-poly(tetrafluoroethylene) (PTFE-g-TFS), styrene-grafted sulfonated polyvinylidene fluoride (PVDF-g-PSSA), a copolymer containing dicarfluorobiphenyl as a monomer, a copolymer containing hexafluorobenzene as a monomer, and a mixture thereof, but are not particularly limited thereto.

Meanwhile, examples of the hydrocarbon-based ionomer include homopolymers, alternating copolymers, random copolymers, block copolymers, multiblock copolymers and graft copolymers comprising at least one hydrocarbon selected from sulfonated imide, sulfonated aryl ether sulfone, sulfonated ether ether ketone, sulfonated benzimidazole, sulfonated sulfone, sulfonated styrene, sulfonated phosphazene, sulfonated ether ether sulfone, sulfonated ether sulfone, sulfonated ether benzimidazole, sulfonated arylene ether ketone, sulfonated ether ketone, sulfonated styrene, sulfonated imidazole, sulfonated ether ketone ketone, aryl ether benzimidazole, and a combinations thereof, and a mixture thereof, but are not particularly limited thereto.

The highly dispersible organic-inorganic hybrid ceria nanoparticle may be included in the range of 0.001 to 20% by weight based on the solid content of the ionomer, but is not limited thereto.

If more than 20% by weight of the highly dispersible organic-inorganic hybrid ceria nanoparticles are added to the ionomer, it is not preferable because there is a high possibility of mechanical property degradation. If an excessive amount of nanoparticles are added to the ionomer having flexible properties, the ionomer becomes brittle and is easily broken or lacks flexibility, so that it cannot be manufactured as a separator, so the ion exchange capacity is highly likely to be lowered.

In addition, the present invention provides an ion exchange membrane with improved oxidation stability and excellent durability manufactured by using the ionomer including the highly dispersible organic-inorganic hybrid ceria nanoparticles. The ion exchange membrane including the highly dispersed ceria nanoparticles may be either an anion exchange membrane (AEM) or a cation exchange membrane (CEM).

When the ion exchange membrane including the highly dispersible ceria nanoparticles is a cation exchange membrane, the cation conductive functional group may be selected from a sulfonic acid group or a carboxyl group, but is not limited thereto.

When the ion exchange membrane containing the highly dispersible ceria nanoparticles is an anion exchange membrane, the anionic conductive functional group may be selected from an ammonium group, a phosphonium group, an imidazolium group, a pyridium group, a guanidinium group, or a sulfonium group, but is not limited thereto. Also, the ammonium group may be any of a primary ammonium group, a secondary ammonium group, a tertiary ammonium group, or a quaternary ammonium group. For example, the anion exchange membrane may be manufactured by modifying the sulfonic acid group of the perfluorine-based sulfonic acid electrolyte membrane with the anion conductive functional group, and various types of anion conductive functional group may be introduced by changing a reaction path.

As such, the highly dispersible organic-inorganic hybrid ceria nanoparticles according to the present invention can be applied to any type of ionomer or ion exchange membrane, and can be used by dispersing in any synthesized ionomer or commercially available ionomer.

In addition, the ion exchange membrane containing the highly dispersed ceria nanoparticles may be an ionomer-based polymer electrolyte membrane or a reinforced composite membrane including a porous support. Examples of the support constituting the reinforced composite film may include polyterafluoroethylene, polyvinyldifluoroethylene, polyethylene, polypropylene, polyethylene terephthalate, polyimide, polyamide, or the like. A reinforced composite membrane in which the ionomer is impregnated into such a porous support is widely used because of its high process efficiency, low hydrogen permeability, and improved mechanical strength and hydrogen ion conductivity.

The present invention will be described in more detail below with reference to Examples and drawings.

### <Preparation of organic-inorganic hybrid ceria nanoparticles>

### Example 1-1

3-mercaptopropyltrimethoxysilane (MPTMS) as a trifunctional silane compound and 1H,1H,2H,2H-perfluorooctyltriethoxysilane (FOTS) as a fluorine-containing silane compound were added to 15 g of propyl alcohol (NPA, n-propyl alcohol), and then, and stirred until the mixture became a homogeneous phase. The homogeneous phase solution was stirred and reacted in an oil bath at 60 °C for 12 hours, and then Ce(NO₃)₃·6H₂O was added to the solution, stirred until the solution became a homogeneous phase, and reacted while being stirred in an oil bath at 60 °C for 12 hours.

After quickly adding 21 g of 1.25M NaOH to the reaction solution, the mixture was stirred for 4 hours to precipitate. 12.5 g of the precipitated solution was divided into two 45 mL conical tubes, and then washed by adding up to 45 mL of DI-water thereto. The conical tube was placed in a centrifuge and centrifuged at 4000 rpm for 5 minutes. After centrifugation, DI-water was removed from the conical tube, and DI-water was added again. After mixing the phase-separated particles using a spatula, the above process was repeated until pH 7 was reached. The separated particles were dried at room temperature for 15 to 17 hours to obtain organic-inorganic hybrid ceria nanoparticles (M-CeNPs) powder.

The weight of each reactant is summarized in [Table 1] below.

**[Table 1]**

| Ceria | MPTMS | FOTS | Ce(NO₃)₃.6H₂O | NPA | 1.25M NaOH(aq) |
|---|---|---|---|---|---|
| Nano powder | (g) | (g) | (g) | (g) | (g) |
| M-CeNP1 | 0.5 | 0.5 | 0.5 | 15 | 21 |
| M-CeNP2 | 0.75 | 0.5 | 0.5 | 15 | 21 |
| M-CeNP3 | 0.75 | 0.25 | 0.5 | 15 | 21 |
| M-CeNP4 | 0.9 | 0.1 | 0.5 | 15 | 21 |
| M-CeNP5 | 1.0 | 0 | 0.5 | 15 | 21 |
| M-CeNP6 | 0 | 1.0 | 0.5 | 15 | 21 |

### Example 1-2

The organic-inorganic hybrid ceria nanoparticles (E-CeNPs) were prepared in the same manner as in Example 1, except that 0.75 g of ethyltrimethoxysilane was used as the trifunctional silane compound and 15 g of ethanol was used as the solvent.

### Example 1-3

The organic-inorganic hybrid ceria nanoparticles (B-CeNPs) were prepared in the same manner as in Example 1, except that 0.75 g of butyltriethoxysilane was used as the trifunctional silane compound and 15 g of ethanol was used as the solvent.

### Example 1-4

The organic-inorganic hybrid ceria nanoparticles (P-CeNPs) were prepared in the same manner as in Example 1, except that 0.75 g of propyltrimethoxysilane was used as the trifunctional silane compound and 15 g of propyl alcohol was used as the solvent.

### Example 1-5

The organic-inorganic hybrid ceria nanoparticles (GM-CeNPs) were prepared in the same manner as in Example 1, except that 0.75 g of 3-glycidoxypropyltrimethoxysilane was used as the trifunctional silane compound and 15 g of propyl alcohol was used as the solvent.

### Example 1-6

The organic-inorganic hybrid ceria nanoparticles (GE-CeNPs) were prepared in the same manner as in Example 1, except that 0.75 g of 3-glycidoxypropyltriethoxysilane was used as the trifunctional silane compound and 15 g of propyl alcohol was used as the solvent.

### Example 1-7

The organic-inorganic hybrid ceria nanoparticles (M-CeNPs) were prepared in the same manner as in Example 1, except that 0.75 g of 3-mercaptopropyltrimethoxysilane was used as the trifunctional silane compound and 15 g of propyl alcohol was used as the solvent.

### Example 1-8

The organic-inorganic hybrid ceria nanoparticles (E-CeNP-F10) were prepared in the same manner as in Example 2, except that 0.25 g of 1H,1H,2H,2H-perfluorodecyltriethoxysilane was used as the fluorine-containing silane compound.

### Example 1-9

The organic-inorganic hybrid ceria nanoparticles (B-CeNP-F10) were prepared in the same manner as in Example 3, except that 0.25 g of 1H,1H,2H,2H-perfluorodecyltriethoxysilane was used as the fluorine-containing silane compound.

### Example 1-10

The organic-inorganic hybrid ceria nanoparticles (P-CeNP-F10) were prepared in the same manner as in Example 4, except that 0.25 g of 1H,1H,2H,2H-perfluorodecyltriethoxysilane was used as the fluorine-containing silane compound.

### Example 1-11

The organic-inorganic hybrid ceria nanoparticles (GM-CeNP-F10) were prepared in the same manner as in Example 5, except that 0.25 g of 1H,1H,2H,2H-perfluorodecyltriethoxysilane was used as the fluorine-containing silane compound.

### Example 1-12

The organic-inorganic hybrid ceria nanoparticles (GE-CeNP-F10) were prepared in the same manner as in Example 6, except that 0.25 g of 1H,1H,2H,2H-perfluorodecyltriethoxysilane was used as the fluorine-containing silane compound.

### Example 2-1

Tetraethyl orthosilicate (TEOS) as the tetrafunctional silane compound and 1H,1H,2H,2H-perfluorooctyltriethoxysilane (FOTS) as the fluorine-containing silane compound were added to 15 g of propyl alcohol (1-Propanol), and then, and stirred until the mixture became a homogeneous phase. The homogeneous phase solution was stirred and reacted in an oil bath at 60 °C for 12 hours, and then Ce(NO₃)₃·6H₂O was added to the solution, stirred until the solution became a homogeneous phase, and reacted while being stirred in an oil bath at 60 °C for 12 hours.

After quickly adding 35 g of 0.1M NaOH to the reaction solution, the mixture was stirred for 4 hours to precipitate. 12.5 g of the precipitated solution was divided into two 45 mL conical tubes, and then washed by adding up to 45 mL of DI-water thereto. The conical tube was placed in a centrifuge and centrifuged at 4000 rpm for 5 minutes. After centrifugation, DI-water was removed from the conical tube, and DI-water was added again. After mixing the phase-separated particles using a spatula, the above process was repeated until pH 7 was reached. The separated particles were dried at room temperature for 15 to 17 hours to obtain organic-inorganic hybrid ceria nanoparticles (T-CeNPs) powder.

The weight of each reactant is summarized in [Table 2] below.

**[Table 2]**

| Ceria | TEOS | FOTS | Ce(NO₃)₃.6H₂ O | NPA | 1.00M NaOH(aq) |
|---|---|---|---|---|---|
| Nano powder | (g) | (g) | | (g) | (g) |
| | | | (g) | | |
| T-CeNP(0g) | 0 | 1 | 0.5 | 15 | 35 |
| T-CeNP(0.25g) | 0.25 | 1 | 0.5 | 15 | 35 |
| T-CeNP(0.5g) | 0.5 | 1 | 0.5 | 15 | 35 |
| T-CeNP(0.75g) | 0.75 | 1 | 0.5 | 15 | 35 |
| T-CeNP(0.1g) | 1.0 | 1 | 0.5 | 15 | 35 |
| T-CeNP(Ce 0.25g) | 0 | 1 | 0.25 | 15 | 35 |

### Example 2-2

The organic-inorganic hybrid ceria nanoparticles (M-CeNPs) were prepared in the same manner as in Example 1, except that 0.25 g of tetramethyl orthosilicate was used as the tetrafunctional silane compound and 15 g of ethanol was used as the solvent.

### Example 2-3

The organic-inorganic hybrid ceria nanoparticles (T-CeNPs) were prepared in the same manner as in Example 2, except that 0.25 g of tetraethyl orthosilicate was used as the tetrafunctional silane compound.

### Example 2-4

The organic-inorganic hybrid ceria nanoparticles (P-CeNPs) were prepared in the same manner as in Example 1, except that 0.25 g of tetraisopropyl orthosilicate was used as the tetrafunctional silane compound.

### Example 2-5

The organic-inorganic hybrid ceria nanoparticles (B-CeNPs) were prepared in the same manner as in Example 1, except that 0.25 g of tetrabutyl orthosilicate was used as the tetrafunctional silane compound.

### Example 2-6

The organic-inorganic hybrid ceria nanoparticles (M-CeNP-F10) were prepared in the same manner as in Example 2, except that 1.00 g of 1H,1H,2H,2H-perfluorodecyltriethoxysilane was used as the fluorine-containing silane compound.

### Example 2-7

The organic-inorganic hybrid ceria nanoparticles (T-CeNP-F10) were prepared in the same manner as in Example 3, except that 1.00 g of 1H,1H,2H,2H-perfluorodecyltriethoxysilane was used as the fluorine-containing silane compound.

### Example 2-8

The organic-inorganic hybrid ceria nanoparticles (P-CeNP-F10) were prepared in the same manner as in Example 4, except that 1.00 g of 1H,1H,2H,2H-perfluorodecyltriethoxysilane was used as the fluorine-containing silane compound.

### Example 2-9

The organic-inorganic hybrid ceria nanoparticles (B-CeNP-F10) were prepared in the same manner as in Example 5, except that 1.00 g of 1H,1H,2H,2H-perfluorodecyltriethoxysilane was used as the fluorine-containing silane compound.

### Example 2-10

The organic-inorganic hybrid ceria nanoparticles (T-CeNP-F8) were prepared in the same manner as in Example 1, except that 1.00 g of triethoxy-1H,1H,2H,2H-tridecafluoro-n-octylsilane was used as the fluorine-containing silane compound.

### Example 2-11

The organic-inorganic hybrid ceria nanoparticles (T-CeNP-F3) were prepared in the same manner as in Example 1, except that 1.00 g of trimethoxy(3,3,3-trifluoropropyl)silane was used as the fluorine-containing silane compound.

### Example 2-12

The organic-inorganic hybrid ceria nanoparticles (T-CeNP-F18) were prepared in the same manner as in Example 1, except that 1.00 g of trimethoxy(1H,1H,2H,2H-heptadecafluorodecyl)silane was used as the fluorine-containing silane compound.

### <Preparation of ionomer and ion exchange membrane>

### Example 3

0.1 g of the organic-inorganic hybrid ceria nanoparticle powder obtained in Example 1-1 was redispersed in an ionomer dispersion solution (EW800 5 w%, PEM, 3M) using a sonicator.

In addition, an ion exchange membrane was prepared by casting a PEM solution in which the organic-inorganic hybrid ceria nanoparticles were redispersed.

### Example 4

0.1 g of the organic-inorganic hybrid ceria nanoparticle powder obtained in Example 2-1 was redispersed in an ionomer dispersion solution (NR-HPA dispersion for AEM, Dupont) (8.057 wt.%) using a sonicator.

In addition, an ion exchange membrane was prepared by casting an AEM solution in which the organic-inorganic hybrid ceria nanoparticles were redispersed.

In the following, the physical properties and performance of the ionomer and ion exchange membrane in which the organic-inorganic hybrid ceria nanoparticles were dispersed were tested.

### <Analysis of particle size>

### Experimental Example 1-1

The size of the organic-inorganic hybrid ceria nanoparticles dispersed in the perfluoro-based sulfonic acid ionomer (perfluoro sulfonic acid (PFSA)) was measured through dynamic light scattering (DSL). As shown in [Table 3] below, the composition with the smallest particle size was M-CeNP2, and the composition with the largest particle size was M-CeNP5.

Through the DSL analysis, the size of the organic-inorganic hybrid ceria particles redispersed in the ionomer was in the range of 1 to 4 nm, and the high dispersibility of the ceria nanoparticles prepared in Examples was confirmed from this result.

**[Table 3]**

| Sample | M-CeNP1 | M-CeNP2 | M-CeNP3 | M-CeNP4 | M-CeNP5 | M-CeNP6 |
|---|---|---|---|---|---|---|
| Average particle size (nm) | 1.375 | 1.146 | 2.283 | 1.438 | 3.707 | 1.176 |

### Experimental Example 1-2

The size of the organic-inorganic hybrid ceria nanoparticles dispersed in the ionomer (cationomer) was measured through the dynamic light scattering (DSL). As shown in [Table 4] below, the composition with the smallest particle size was T-CeNP (0 g), and the composition with the largest particle size was T-CeNP (Ce 0.25 g).

Through the DSL analysis, the size of the organic-inorganic hybrid ceria particles redispersed in the ionomer was in the range of 1 to 3 nm, and it was confirmed from this result that the ceria nanoparticles prepared in Examples had high dispersibility.

**[Table 4]**

| Sample | T-CeNP (0g) | T-CeNP (0.25g) | T-CeNP (0.5g) | T-CeNP (0.75g) | T-CeNP (1g) | T-CeNP (Ce 0.25g) |
|---|---|---|---|---|---|---|
| Particle size in Cationomer solution (d.nm) | 1.318 | 1.654 | 2.697 | 1.992 | 1.755 | 2.941 |

### <Microstructure analysis of nanoparticles>

### Experimental Example 2-1

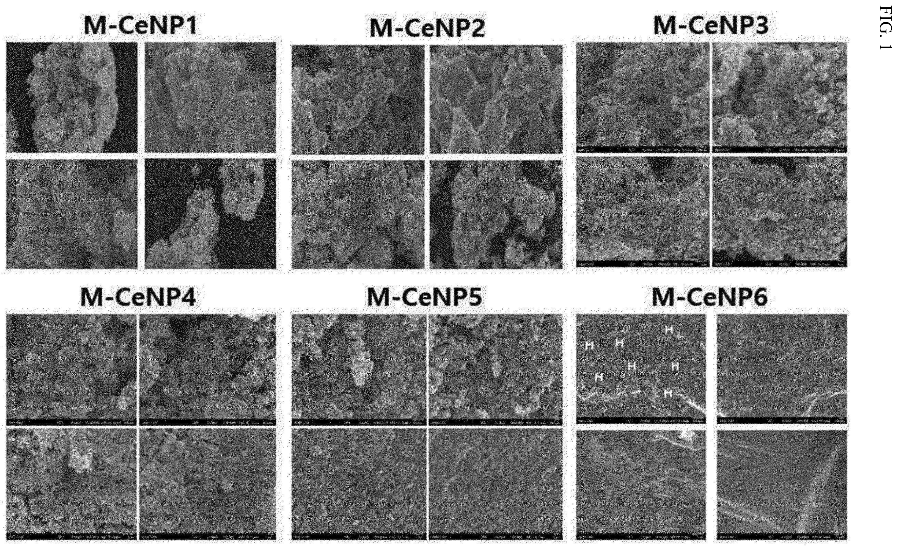

Scanning electron microscope (SEM) and energy dispersive spectrometer (EDS) analysis were performed to investigate the microstructure and ceria content of the organic-inorganic hybrid ceria nanoparticles prepared in Example 1-1. SEM and EDS were measured with the powder dried in an oven at 100 °C for 24 hours, and the particle size of the prepared powder was very small at the level of 1 to 2 nm. Thus, it was impossible to confirm the microstructure with SEM. FIG. 1 shows the SEM photographic results of the organic-inorganic hybrid ceria nanoparticles, and the measured sizes of nanoparticles are summarized in [Table 5].

In addition, the EDS measurement results are shown in [Table 6] below, and it can be confirmed that the composition with high ceria content is M-CeNP5.

**[Table 5]**

| Sample | M-CeNP 1 | M-CeNP2 | M-CeNP3 | M-CeNP4 | M-CeNP5 | M-CeNP6 |
|---|---|---|---|---|---|---|
| Average particle size (nm) | 17.200 | 13.500 | 16.285 | 25.187 | 21.500 | 14.790 |

**[Table 6]**

| Sample | M-CeNP1 | M-CeNP2 | M-CeNP3 | M-CeNP4 | M-CeNP5 | M-CeNP6 |
|---|---|---|---|---|---|---|
| Remaining inorganic content (wt.%) | 53.40 | 42.80 | 58.03 | 68.92 | 79.89 | 26.93 |

### Experimental Example 2-2

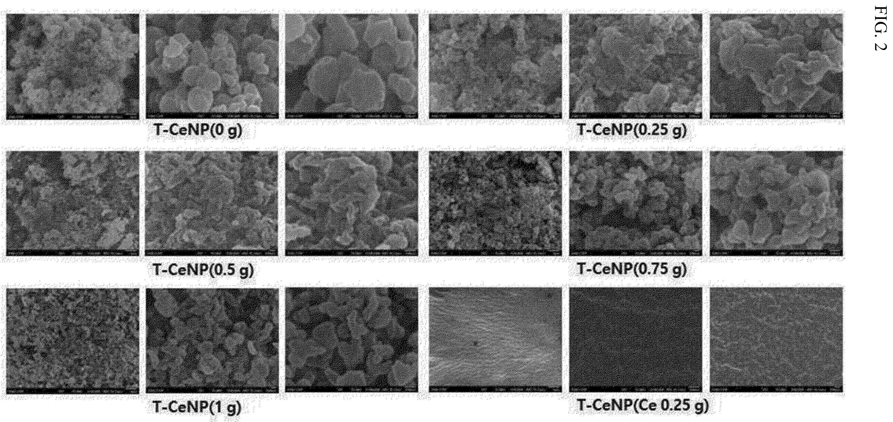

Scanning electron microscope (SEM) and energy dispersive spectrometer (EDS) analysis were performed to investigate the microstructure and ceria content of the organic-inorganic hybrid ceria nanoparticles prepared in Example 2-1. SEM and EDS were measured with the powder dried in an oven at 100 °C for 24 hours, and the particle size of the prepared powder was very small at the level of 1 to 2 nm. Thus, it was impossible to confirm the microstructure with the SEM. FIG. 2 shows the SEM photographic results of the organic-inorganic hybrid ceria nanoparticles, and the measured sizes of the nanoparticles are summarized in [Table 7].

In addition, the EDS measurement results are shown in [Table 8] below, and it can be confirmed that the composition with high ceria content is T-CeNP (0.25 g), and the composition with low ceria content is T-CeNP (1 g).

**[Table 7]**

| Sample | T-CeNP (0g) | T-CeNP (0.25g) | T-CeNP (0.5g) | T-CeNP (0.75g) | T-CeNP (1g) |
|---|---|---|---|---|---|
| Particle size in Cationomer solution (d.nm) | 332 | 166 | 116 | 188 | 150 |

**[Table 8]**

| Sample | T-CeNP (0g) | T-CeNP (0.25g) | T-CeNP (0.5g) | T-CeNP (0.75g) | T-CeNP (1g) |
|---|---|---|---|---|---|
| Amount of Ceria in nano powder (wt.%) | 22.44 | 26.40 | 25.98 | 22.15 | 21.16 |

### <Fenton Test>

### Experimental Example 3-1

According to Example 3, the ion exchange membrane was prepared by casting a PEM solution in which the organic-inorganic hybrid ceria nanoparticles were redispersed, and then the Fenton Test was performed to measure oxidation stability.

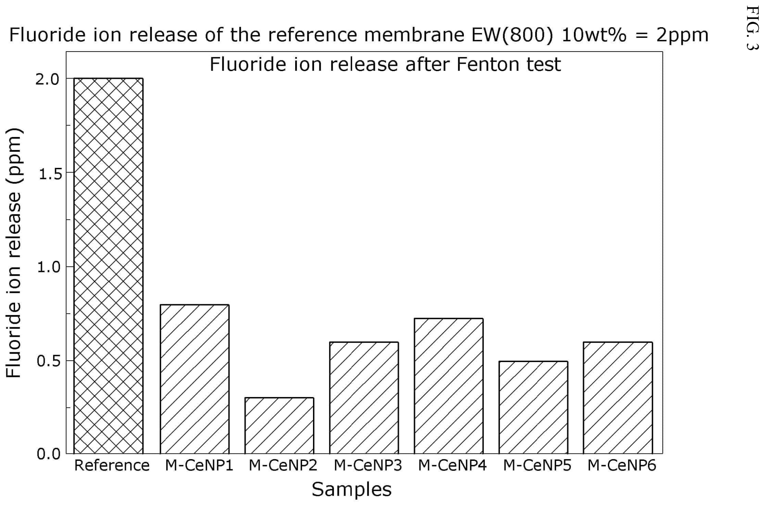

As shown in FIG. 3, in the case of the ion exchange membrane to which the organic-inorganic hybrid ceria nanoparticles were not added, the fluorine ion release was 2 ppm. However, in the case of the ion exchange membrane to which the organic-inorganic hybrid ceria nanoparticles dispersion solution was added, the composition with the lowest fluoride ion release was M-CeNP2 with the measured release of 0.25 ppm, and the composition with the highest fluorine ion release was M-CeNP1 with the measured release of 0.75 ppm.

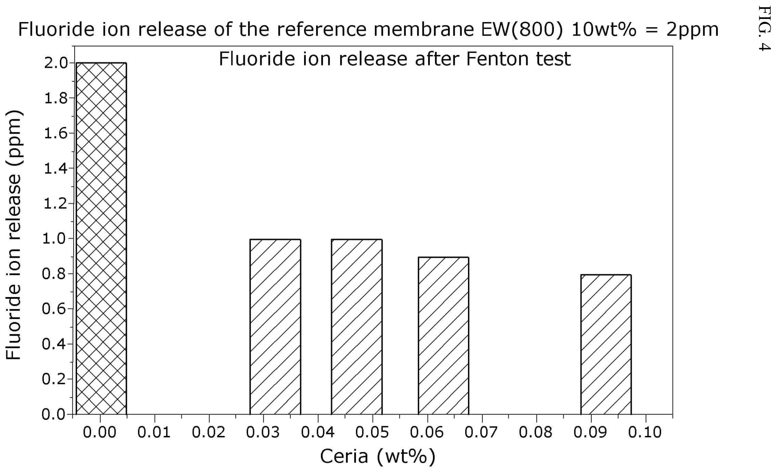

As shown in FIG. 4, the concentration of the organic-inorganic hybrid ceria nanoparticle dispersion solution in which M-CeNP1 was nano-dispersed added to the ion exchange membrane was adjusted. The concentration that showed the lowest fluoride ion release was measured to 0.8 ppm when 2.87 X 10⁻⁴ g of the ionomer dispersion solution with M-CeNP1 nanoparticles were added, and the concentration that showed the highest fluoride ion release was measured to 1.0 ppm when 0.96 X 10⁻⁴ g of the dispersion solution were added.

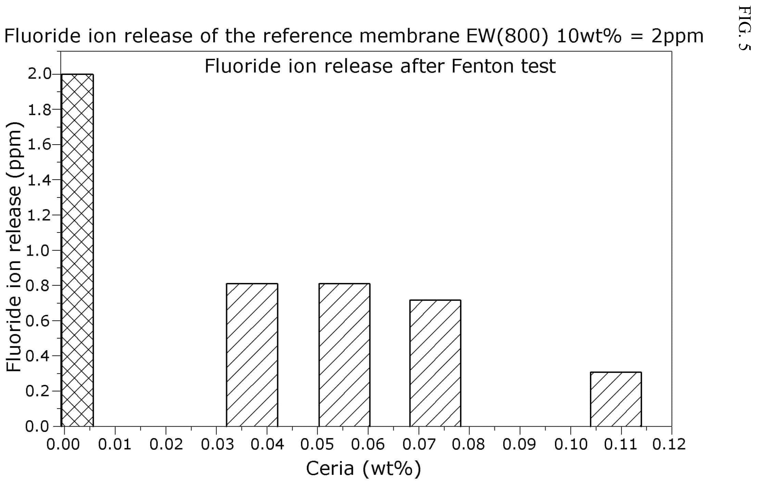

Also, as shown in FIG. 5, the concentration of the organic-inorganic hybrid ceria nanoparticle dispersion solution in which M-CeNP2 was nano-dispersed was added to the ion exchange membrane was adjusted. The concentration that showed the lowest fluoride ion release was measured to 0.3 ppm when 3.3 X 10⁻⁴ g of the ionomer dispersion solution with M-CeNP2 nanoparticles were added, and the concentration that showed the highest fluoride ion release was measured to 0.8 ppm when 1.12 X 10⁻⁴ g of the dispersion solution were added.

### Experimental Example 3-2

According to Example 4, the ion exchange membrane was prepared by casting an AEM solution in which the organic-inorganic hybrid ceria nanoparticles were redispersed, and then the Fenton Test was performed to measure oxidation stability.

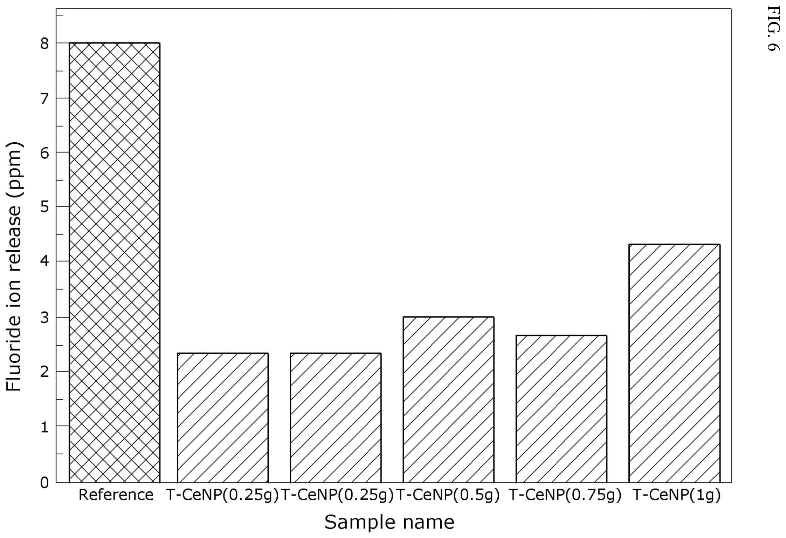

As shown in FIG. 6, in the case of the ion exchange membrane to which the organic-inorganic hybrid ceria nanoparticles were not added, the fluorine ion release was measured to 8 ppm. However, in the case of the ion exchange membrane to which the organic-inorganic hybrid ceria nanoparticle dispersion solution was added, the compositions with the lowest fluoride ion release were T-CeNP(0 g), T-CeNP(0.25 g) with the measured release of 2.33 ppm. The composition with the highest fluoride ion release was T-CeNP (1 g) with the measured release of 4.33 ppm.

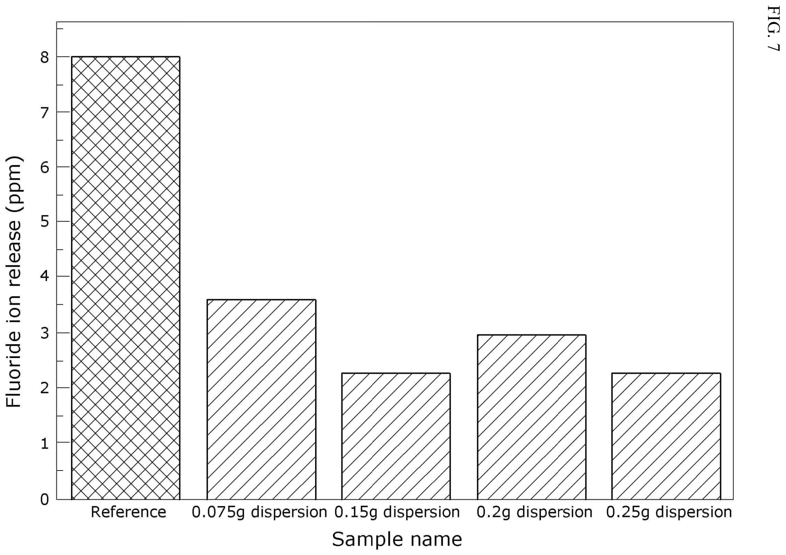

Also, as shown in FIG. 7, the concentration of the organic-inorganic hybrid ceria nanoparticle dispersion solution added to the ion exchange membrane was adjusted. The concentration that showed the lowest fluoride ion release was measured to 2.33 ppm when 0.15 g and 0.25 g of the dispersion solution were added, and the concentration that showed the highest fluoride ion release was measured to 3.66 ppm when 0.075 g of the dispersion solution was added.

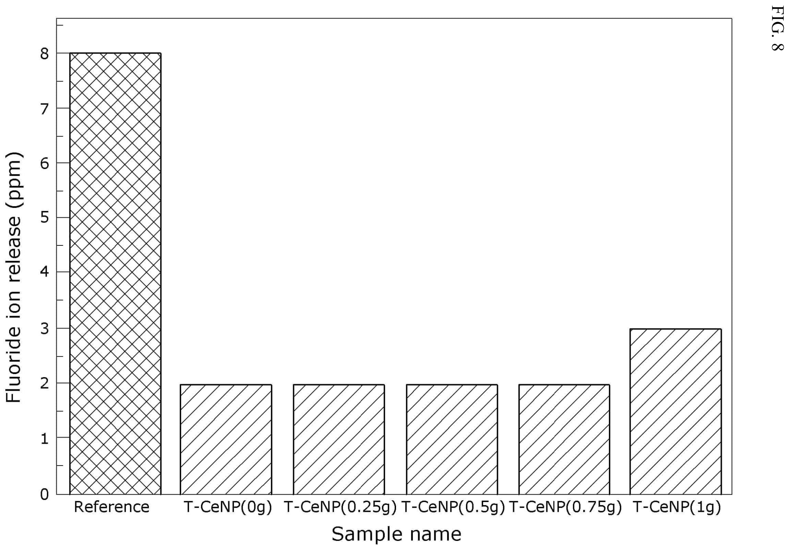

FIG. 8 shows a Fenton test result for the ion exchange membrane in which the same amount of the organic-inorganic hybrid ceria nanoparticle powder is directly dispersed. The composition with the lowest fluoride ion release was T-CeNP (0 g), T-CeNP (0.25 g), T-CeNP (0.5 g), and T-CeNP (0.75 g) with the measured release of 2 ppm, and the composition with the highest fluoride ion release was T-CeNP (1 g) with the measured release of 3 ppm.

The Fenton test results show that the ion exchange membrane in which the organic-inorganic hybrid ceria nanoparticles are dispersed according to an embodiment exhibits significantly higher oxidation stability than the ion exchange membrane having no organic-inorganic hybrid ceria nanoparticles.

## Claims

1. A method for manufacturing a highly dispersible organic-inorganic hybrid ceria nanoparticle comprising the steps of:
i) preparing a fluorine-containing organic-inorganic hybrid compound through a hydrolysis-condensation reaction between a fluorine-containing silane compound and a multifunctional silane compound:
ii) preparing a nanoparticle in which the fluorine-containing organic-inorganic hybrid compound and ceria are chemically bonded through the hydrolysis-condensation reaction by adding a cerium precursor to a solution containing the fluorine-containing organic-inorganic hybrid compound; and
iii) precipitating and separating the nanoparticle by adding a basic aqueous solution to the solution.

2. The method of claim 1, further comprising the step of preparing the nanoparticle in a fine powder state by drying the nanoparticle separated in the step of iii).

3. The method of claim 1, wherein the fluorine-containing silane compound includes a fluoroalkoxysilane compound, a fluoroalkylsilane compound, or a mixture thereof.

4. The method of claim 1, wherein the multifunctional silane compound is selected from a trifunctional silane compound, a tetrafunctional silane compound, and a mixture thereof.

5. The method of claim 4, wherein the trifunctional silane compound is a trialkoxysilane compound.

6. The method of claim 4, wherein the tetrafunctional silane compound is a tetraalkyl orthosilicate compound.

7. The method of claim 1, wherein in the step of iii), the added basic aqueous solution is selected from sodium hydroxide, ammonia aqueous solution, and a mixture thereof.

8. The method of claim 1, wherein in the step of i), a weight ratio of the fluorine-containing silane compound and the multifunctional silane compound is in a range of 0.1:99 to 99:0.1.

9. The method of claim 1, wherein in the step of ii), the cerium precursor is added in an amount of 0.1 to 80% by weight in the solution containing the fluorine-containing organic-inorganic hybrid compound.

10. A highly dispersible organic-inorganic hybrid ceria nanoparticle in which a fluorine-containing organic-inorganic hybrid compound and ceria are chemically bonded, wherein the fluorine-containing organic-inorganic hybrid compound is produced by a hydrolysis-condensation reaction between a fluorine-containing silane compound and a multifunctional silane compound.

11. The highly dispersible organic-inorganic hybrid ceria nanoparticle of claim 10, wherein the highly dispersible organic-inorganic hybrid ceria nanoparticle is able to be redispersed in an organic solvent or ionomer solution in a nano size.

12. The highly dispersible organic-inorganic hybrid ceria nanoparticle of claim 11, wherein the size of the redispersed nanoparticle is in a range of 1.2 to 40 nm.

13. The highly dispersible organic-inorganic hybrid ceria nanoparticle of claim 10, wherein the fluorine-containing silane compound includes a fluoroalkoxysilane, a fluoroalkylsilane compound, or a mixture thereof, and the multifunctional silane compound includes a trialkoxysilane compound, a tetraalkyl orthosilicate compound, or a mixture thereof.

14. An ionomer with excellent oxidation stability, comprising the highly dispersible organic-inorganic hybrid ceria nanoparticle of claim 10.

15. A highly durable ion exchange membrane comprising the highly dispersible organic-inorganic hybrid ceria nanoparticle of claim 10.
